Europäisches Patentamt

European Patent Office

Office européen des brevets

(11) Veröffentlichungsnummer: **0 220 655**
**A2**

## (12) EUROPÄISCHE PATENTANMELDUNG

(21) Anmeldenummer: 86114542.3

(22) Anmeldetag: 21.10.86

(51) Int. Cl.4: **C01B 17/02**

(30) Priorität: 26.10.85 DE 3538247

(43) Veröffentlichungstag der Anmeldung:
06.05.87 Patentblatt 87/19

(84) Benannte Vertragsstaaten:
AT CH DE FR GR IT LI

(71) Anmelder: **HOECHST AKTIENGESELLSCHAFT**
**Postfach 80 03 20**
**D-6230 Frankfurt am Main 80(DE)**

(72) Erfinder: **Albrecht, Konrad, Dr.**
**Sodener Strasse 64**
**D-6233 Kelkheim (Taunus)(DE)**
Erfinder: **Frisch, Gerhard, Dr.**
**Westerwaldstrasse 7**
**D-6393 Wehrheim(DE)**

(54) **Neue schwefelhaltige Dispersionen.**

(57) Gegenstand der Erfindung sind neue schwefelhaltige Dispersionen, gekennzeichnet durch einen Gehalt von 40-75 Gew.-% Schwefel, 0,5 bis 5 Gew.-% des Na-Salzes einer polymerisierten Alkyl-Naphthalin-Sulfonsäure und 0,5 bis 5 Gew.-% eines ethoxylierten Alkylphenolnovolaks. Diese Formulierungen besitzen gute Stabilitäten und hervorragende Mischbarkeitseigenschaften mit anderen Wirkstoff-Konzentraten.

## Neue schwefelhaltige Dispersionen

Schwefel ist als Mittel zur Bekämpfung von pflanzlichen Pilzerkrankungen schon seit dem Altertum bekannt. Heutzutage werden große Mengen von Schwefel im wesentlichen in Form von wasserdispergierbaren Spritzpulvern (WP) hergestellt wie beispielsweise [R]COSAN 80 der Hoechst AG, [R]THIOVIT der Sandoz AG und [R]KUMULAN der BASF AG. Spritzpulver sind jedoch problematisch in ihrer Anwendung, da sie leicht stauben und daher schwierig zu handhaben sind. Ferner treten Probleme bei der Kombination mit anderen Wirkstoffformulierungen auf. Aus diesem Grunde finden Flüssigformulierungen, insbesondere Dispersionsformulierungen von Schwefel auf Wasserbasis, in neuerer Zeit bevorzugt Anwendung. Flüssigformulierungen können einfacher und sicherer dosiert werden und können im Falle von Schwefel explosionssicher durch Naßvermahlung hergestellt werden.

Bisher sind Dispersionsformulierungen auf Schwefelbasis mit einem Wirkstoffgehalt im Bereich von 500 g/l bis 800 g/l bekannt; es sind dies beispielsweise die Handelsprodukte [R]MICROTHIOL TH 750 g/l von RSR (Raffinérie du Soufre Réunie), [R]Actiol 800 g/l von Phyteurop, [R]Zolfo 800 g/l von Sipcam und [R]ELOSAL 500 g/l von Hoechst Columbiana.

Nachteilig bei diesen Formulierungen ist die häufige Bildung von Sedimenten bei ihrer Lagerung, sowie ungünstige Mischbarkeitseigenschaften bei der Kombination mit anderen handelsüblichen Wirkstoffkonzentraten. Bei solchen Mischungen sind häufig Ausflockungen zu beobachten. Insbesondere nachteilig ist der relativ geringe Schwefelgehalt von maximal 800 g/l bei diesen Formulierungen, welcher dem Gehalt eines 80 %igen Spritzpulvers entspricht.

Überraschenderweise wurde nun neue schwefelhaltige wäßrige Dispersionen gefunden, die es erlauben, den Gehalt an Schwefel über 800 g Wirkstoff/l hinaus zu erhöhen.

Gegenstand der vorliegenden Erfindung sind daher wäßrige schwefelhaltige Dispersionen, dadurch gekennzeichnet, daß sie

40 bis 75 Gew.-% Schwefel

0,5 bis 5 Gew.-% Salz einer polymerisierten Alkyl-Naphthalin-Sulfonsäure und

0,5 bis 5 Gew.-% eines ethoxylierten Alkylphenolnovolaks enthalten.

Überraschenderweise gewährleistet diese spezielle Tensidkombination eine hohe Stabilität der Schwefelformulierungen auch bei hohen Wirkstoffgehalten.

Bevorzugt enthalten die erfindungsgemäßen Formulierungen 60 bis 70 Gew.-% Schwefel, 1,5 bis 3,5 Gew.-% Natrium-Salz einer polymerisierten Alkyl-Naphthalin-Sulfonsäure und 1 bis 3 Gew.-% eines ethoxylierten Alkylphenolnovolaks.

Als Natrium-Salz einer polymerisierten Alkyl-Naphthalin-Sulfonsäure wird insbesondere das Handelsprodukt [R]Darvan Nr. 1 der R.T. Vanderbilt Co. eingesetzt, s. auch Datenblatt Darvan No 1 der Vanderbilt Corp. vom 7.1.1981. Dieses Produkt wird in Lateinamerika auch unter dem Handelsnamen Daxad No. 17 von der Firma Darex/Argentinien vertrieben.

Als ethoxylierter Alkylphenolnovolak finden insbesondere solche Novolake, wie sie in der DE-OS 2901462 beschrieben sind, Anwendung. Besonders bevorzugt sind solche Novolake, welche durch Umsetzung von einem Nonylphenol mit 1 bis 2 Mol-Äquivalent Formaldehyd und anschließender Ethoxylierung mit 30 bis 40 Mol EtO bezogen auf das Phenol hergestellt wurden. So läßt sich beispielsweise vorteilhaft das Produkt Hoe S 2774 der Hoechst AG einsetzen.

Der Restanteil der erfindungsgemäßen Formulierungen besteht in der Regel aus Wasser. Es können jedoch auch noch andere übliche Zusatzmittel beigefügt werden, wie beispielsweise Frostschutzmittel, Entschäumer oder Verdickungsmittel. Die erfindungsgemäßen Mittel können 0,1 -4 Gew.-%, insbesondere 0,5 - 2,0 Gew.-%, Entschäumer, 0,5 -15 Gew.-%, insbesondere 2,0 -7,0 Gew.-% Frostschutzmittel und 0,01 -3 Gew.-%, insbesondere 0,1 -1,0 Gew.-% Verdicker enthalten. Als Frostschutzmittel kommen in Betracht Glykolverbindungen wie Ethylenglykol, Propylenglykol. Als Enschäumer finden beispielsweise Verwendung die handelsüblichen Silikon-Verbindungen; als Verdickungsmittel können beispielsweise Polysaccharide, z. B. die Produkte [R]Veegum (Vanderbuilt Co.), [R]Kelzan S (KELCO CO.) oder [R]Rhodopol 23 (Rhône-Poulenc) eingesetzt werden.

Die nachfolgenden Beispiele dienen zur Erläuterung der Erfindung.

Formulierungs-Beispiele:

1.) 40,0 % Schwefel ( = 500 g/l)

4,0 % Darvan No. 1 (Vanderbilt Co.)

2,0 % Hoe S 2774 (Hoechst AG)

0,5 % RVeegum (Vanderbilt Co.)

5,0 % Propylenglykol

0,5 % Entschäumer SE (Wacker AG)

48,0 % Wasser

2.) 50,0 % Schwefel ( = 700 g/l)

4,0 % Darvan No. 1

2,5 % Hoe S 2774

8,0 % Ethylenglykol

2,0 % Entschäumer SE 2

0,5 % Veegum

33,0 % Wasser

3.) 57,5 % Schwefel ( = 850 g/l)

4,5 % Darvan No. 1

2,5 % Hoe S 2774

0,5 % R Kelzan S (Kelco Co.)

1,5 % Entschäumer SE 2

8,0 % Propylenglykol

25,5 % Wasser

4.) 64,5 % Schwefel ( = 1000 g/l)

2,8 % Darvan No. 1

2,0 % Hoe S 2774

5,0 % Propylenglykol

1,0 % Entschäumer SE 2

0,3 % Veegum

24,4 % Wasser

5.) 70,0 % Schwefel ( = 1150 g/l)

3,0 % Darvan No. 1

2,2 % Hoe S 2774

0,3 % Veegum

1,0 % Entschäumer

4,0 % Propylenglykol

19,5 % Wasser

Alle % Angaben sind Gewichtsprozente (w/w).

Die Herstellung dieser Formulierungen erfolgte durch Naßvermahlen mittels Perlmühlen.

Die oben aufgeführten Rezepturen sind froststabil bis -10°c und lagerstabil.

Die oben aufgeführten Formulierungen sind ferner gut mischbar mit handelsüblichen Emulsions-Konzentraten anderer Pflanzenschutzmittel.

**Ansprüche**

1. Wäßrige schwefelhaltige Dispersionen, dadurch gekennzeichnet, daß sie

```
40    bis 75 Gew.-% Schwefel
 0,5 bis  5    "      Salz einer polymerisierten
                      Alkyl-Naphthalin-Sulfonsäure
                      und
 0,5 bis  5    "      eines ethoxylierten Alkylphe-
                      nolnovolaks
```

enthalten.

2. Schwefelhaltige Dispersionen gemäß Ansprcuh 1, dadurch gekennzeichnet, daß sie

```
60    bis 70   Gew.-% Schwefel
 1,5 bis  3,5     "    Na-Salz einer polymerisierten
                       Alkyl-Naphthalin-Sulfonsäure
                       und
 1   bis  3       "    eines ethoxylierten Alkyl-
                       phenolnovolaks
```

enthalten.

3. Schwefelhaltige Dispersionen gemäß einem der Ansprüche 1 oder 2, dadurch gekennzeichnet, daß sie als ethoxylierten Alkylphenolnovolak ein Umsetzungsprodukt aus Nonylphenol mit 1-2 Moläquivalent Formaldehyd und 35-40 Mol Ethylenoxid enthalten.

4. Schwefelhaltige Dispersionen gemäß einem der Ansprüche 1 bis 3, dadurch gekennzeichnet, daß sie als Na-Salz einer polymerisierten Alkyl-Naphthalin-Sulfonsäure das Handelsprodukt [R]Darvan No. 1 oder [R]Daxad No. 17 enthalten.